# FASCICULE DE BREVET EUROPEEN

(11) **EP 0 516 551 B1**
(45) Date de publication et mention de la délivrance du brevet: **27.03.1996**
(21) Numéro de dépôt: 92401472.3
(22) Date de dépôt: 29.05.1992
(51) Int. Cl.: B03B 5/28

(54) **Procédé de tri de produits végétaux, notamment de pieds de champignons**
Verfahren zum Sortieren von pflanzlichen Produkten, insbesondere von Füssen von Pilzen
Method of sorting vegetal products, particularly stems of mushrooms

(30) Priorité: 31.05.1991 FR 9106578
(43) Date de publication de la demande: 02.12.1992
(73) Titulaire: S.A. ROYAL CHAMPIGNON, F-49427 Saumur Cédex (FR)
(72) Inventeur: Meulnart, Alain, 75016 Paris (FR)
(74) Mandataire: Ahner, Francis

(56) Documents cités:
- WO-A-91/02450
- FR-A- 414 660
- FR-A- 2 038 068
- US-A- 2 929 502
- US-A- 2 978 003
- US-A- 4 858 769

## Description

La présente invention concerne un procédé de tri de produits végétaux, destiné à séparer ceux desdits produits végétaux comportant des résidus de culture, dits produits à résidus, de ceux desdits produits végétaux dépourvus desdits résidus, dits produits sans résidus.

L'invention trouve une application particulièrement avantageuse au tri des rondelles de pieds de champignons, notamment des champignons de Paris.

Un procédé connu de traitement industriel des champignons de Paris consiste à effectuer une première coupe des pieds de champignons, destinée à éliminer l'extrémité des pieds comportant lesdits résidus de culture, à savoir des restes de terre de gobetage et de compost, ainsi que des filaments mycéliens. Les pieds de champignons sont ensuite soumis à une deuxième coupe de façon à obtenir, d'une part, des champignons dits de premier choix, constitués d'un chapeau et d'un pied de longueur normalisée, et, d'autre part, des rondelles qui sont récupérées pour être commercialisées en tant que produits de deuxième choix. Les champignons de premier choix et les rondelles subissent alors soit un blanchiment, soit une autre opération de transformation, tel que la surgélation ou autre. Ces champignons de premier choix et les rondelles sont ensuite traités selon un procédé de transformation comme l'appertisation, la surgélation, etc.

Par contre, du fait que la longueur des pieds de champignons est très variable d'un champignon à l'autre, il peut se produire que pour des champignons trop courts, la première coupe soit inefficace avec pour conséquence que la rondelle récupérée après la deuxième coupe comporte lesdits résidus de culture. Il est donc nécessaire, après blanchiment et avant la mise en boîte, de trier les rondelles, qui constituent alors lesdits produits végétaux mentionnés dans le préambule, afin de séparer les rondelles à résidus des rondelles sans résidus.

Aussi, le problème technique à résoudre par l'objet de la présente invention est de proposer un procédé de tri conforme au préambule qui serait compatible avec les exigences industrielles de coût et de temps de mise en oeuvre, et qui permettrait de séparer avec une bonne efficacité les produits à résidus des produits sans résidus.

Le document US-A-4,858,769 décrit un procédé de tri de produits végétaux destiné à séparer des produits à densité plus élevée de produits à densité plus basse. Un tel procédé comprend une opération de tri par différence de densité consistant à introduire lesdits produits végétaux dans un milieu liquide de séparation dont la densité est comprise entre la densité des produits les plus lourds et celle-là des produits les plus légers, et à séparer les produits végétaux flottant à la surface du milieu liquide des produits végétaux se déposant au fond dudit milieu liquide.

La solution au problème technique posé est caractérisée en ce que lesdits produits sont soumis à un procédé de tri, destiné à séparer ceux 12 desdits produits végétaux comportant des résidus de culture, dits produits à résidus, de ceux 11 desdits produits végétaux dépourvus desdits résidus, dits produits sans résidus, caractérisé en ce que lesdits produits végétaux sont soumis aux opérations successives suivantes :
i) une opération de blanchiment, puis
ii) une opération de tri par différence de température consistant à faire circuler les produits végétaux dans un courant 50 d'eau sur une distance D déterminée de façon que, après avoir parcouru ladite distance, les produits végétaux 21, 22 de grande taille conservent une température supérieure à la température du courant 50 d'eau, tandis que les produits végétaux 11, 12 de taille inférieure sont refroidis à la température du courant d'eau, et à séparer les produits végétaux flottant à la surface du courant 50 d'eau des produits végétaux tombés au fond dudit courant d'eau, ces derniers étant alors soumis à
iii) une opération de tri par différence de densité consistant à introduire lesdits produits végétaux dans un milieu liquide 40 de séparation dont la densité est comprise entre la densité des produits 11 sans résidus et la densité moyenne des produits 12 à résidus, et à séparer les produits végétaux flottant à la surface du milieu liquide 40 des produits végétaux se déposant au fond dudit milieu liquide.

Ainsi, en ajustant la valeur de la densité du milieu liquide de séparation, on peut obtenir que les produits sans résidus, qui sont moins denses que le milieu liquide lui-même, flottent à la surface du milieu liquide, alors que les produits à résidus, dont les résidus contribuent à augmenter la densité jusqu'à une valeur supérieure à celle du milieu liquide de séparation, se déposent par gravité au fond dudit milieu liquide. Il suffit alors, à l'aide de moyens conventionnels, de séparer les produits flottant à la surface de ceux déposés au fond du milieu liquide.

On a ainsi réalisé un procédé de tri peu coûteux, de mise en oeuvre simple et rapide, et dont la Demanderesse a montré qu'il pouvait atteindre une efficacité supérieure à 90 %.

Dans une forme particulière de réalisation du procédé conforme à l'invention, ledit milieu liquide de séparation est constitué par une solution aqueuse de chlorure de sodium, dont la concentration peut être ajustée en fonction de la nature des produits végétaux considérés.

Pour certains produits végétaux, comme les champignons, qui ont une densité à l'état frais sensiblement inférieure à celle de l'eau, prise comme milieu liquide de séparation, il est nécessaire, pour éviter que tous les produits végétaux ne flottent à la surface du liquide sans séparation possible, d'effectuer préalablement, à ladite opération de tri par différence de densité, une opération de blanchiment au cours de laquelle les produits végétaux sont cuits, par exemple pour les champignons à une température voisine de 100°C, ce qui a pour effet d'éliminer de ces produits des constituants tels que l'eau libre et certains composés gazeux, et donc d'augmenter leur densité à froid, celle-ci restant inférieure à celle des résidus de culture. Ainsi, on dispose d'un spectre de densité allant de la densité la plus faible pour les produits sans résidus à la densité la plus grande pour les produits à résidus dans lesquels la proportion de matière végétale est faible par rapport aux résidus. La densité du milieu liquide de séparation est ajustée entre ces deux valeurs extrêmes en fonction de la résolution de séparation que l'on désire obtenir.

En pratique, l'efficacité du procédé de l'invention est limitée à une valeur maximale théorique qui provient du fait que certains produits à résidus, présentant une grande taille, ont une densité voisine de celle des produits sans résidus, inférieure à celle du milieu liquide de séparation. Dans le cas des champignons, ces produits de grande taille à résidus sont constitués par des rondelles provenant de pieds dont la longueur est voisine de la hauteur de la première coupe tout en lui étant inférieure.

En conséquence, les produits de grande taille à résidus flottent également à la surface du milieu liquide et sont récupérés avec les produits sans résidus. Pour remédier à cet inconvénient, on pourrait ajuster la densité du milieu liquide à une valeur très voisine mais supérieure à celle des produits sans résidus. Toutefois, un tel dosage demanderait une résolution très fine de la séparation exigeant une précision de dosage impossible à atteindre en milieu industriel. De plus, la séparation entre produits de grande taille à résidus et les produits sans résidus serait très lente, et, en tout état de cause, l'élimination des produits de grande taille à résidus constituerait une perte importante de matière inacceptable sur le plan industriel.

Aussi, de façon à résoudre le problème technique lié à la présence de produits de grande taille à résidus, la présente invention prévoit que, préalablement à l'opération de tri par différence de densité, ledit procédé comprend une opération de tri par différence de température consistant, à la suite de l'opération de blanchiment, à faire circuler les produits végétaux cuits dans un courant d'eau sur une distance déterminée de façon que, après avoir parcouru ladite distance, les produits végétaux de grande taille conservent une température supérieure à la température du courant d'eau, tandis que les produits végétaux de taille inférieure sont refroidis à la température du courant d'eau, et à séparer les produits végétaux flottant à la surface du courant d'eau des produits végétaux tombés au fond dudit courant d'eau, ces derniers étant ensuite soumis à l'opération de tri par différence de densité.

En effet, en sortie de blanchiment, les produits végétaux ont une densité qui, à froid, est supérieure à celle de l'eau à la température ambiante, mais qui, à chaud, reste inférieure à la densité de l'eau à la température ambiante, ceci à cause de la présence dans les produits d'eau de constitution par exemple. Lorsque les produits végétaux cuits sont introduits dans le courant d'eau précité, les produits végétaux de petite taille sont refroidis très vite à la température de l'eau, et donc tombent rapidement au fond du courant d'eau avant d'avoir parcouru la distance prévue pour ledit courant d'eau, tandis que les produits de grande taille, gardant une température supérieure à celle de l'eau, continuent de flotter à la surface du courant d'eau et peuvent donc être séparés des produits de petite taille. Ces derniers sont ensuite traités par le procédé de tri par différence de densité, les produits de grande taille étant triés manuellement par exemple, pour séparer ceux qui contiennent des résidus de culture de ceux qui en sont exempts.

Une caractéristique du procédé de l'invention, qui contribue également à assurer une meilleure homogénéité de la taille des produits végétaux soumis à l'opération de tri par différence de densité, est remarquable en ce que, lesdits produits végétaux étant constitués par des rondelles de champignons, ledit procédé comprend une première opération de tri par coupe consistant à couper lesdits pieds de champignons selon au moins trois hauteurs de coupes différentes. En multipliant ainsi les coupes des pieds de champignons, on élimine les rondelles longues à résidus qui, comme cela a été mentionné plus haut, limite l'efficacité du tri par différence de densité.

La description qui va suivre en regard des dessins annexés, donnés à titre d'exemples non limitatifs, fera bien comprendre en quoi consiste l'invention et comment elle peut être réalisée.

La figure 1 est une vue schématique en coupe d'un dispositif de mise en oeuvre de l'opération de tri par différence de densité du procédé conforme à l'invention.

La figure 2 est une vue schématique en coupe d'un dispositif de mise en oeuvre de l'opération de tri par différence de température du procédé conforme à l'invention.

La figure 3 est une vue schématique en coupe d'un dispositif de mise en oeuvre de l'opération de tri par coupe du procédé conforme à l'invention.

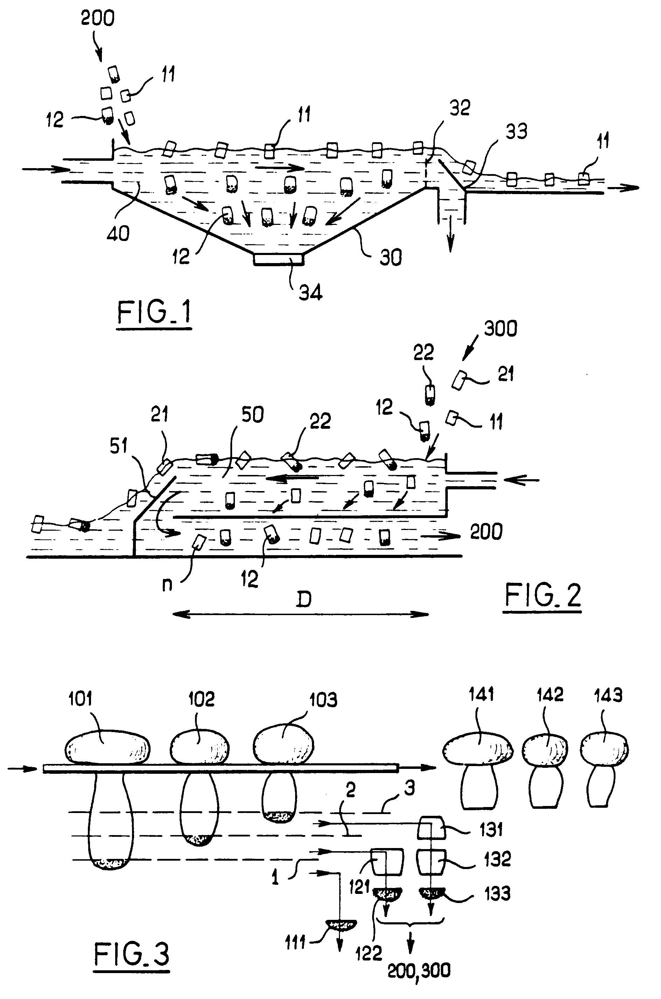

Sur la figure 1 est représenté un dispositif pour mettre en oeuvre un procédé de tri de produits végétaux 11, 12, destiné à séparer ceux 12 desdits produits végétaux comportant des résidus de culture, dits produits à résidus, de ceux 11 desdits produits végétaux dépourvus desdits résidus, dits produits sans résidus. Ces produits végétaux, des rondelles de champignons par exemple, peuvent être soumis préalablement à une opération de blanchiment au cours de laquelle les produits sont cuits à une température comprise, pour les champignons, entre 90 et 100°C, de préférence au voisinage de 98°C. Comme cela a été expliqué plus haut, cette opération de blanchiment permet d'amener la densité des champignons à froid à une valeur comprise entre celle de l'eau et celle desdits résidus de culture.

Comme l'indique la figure 1, le procédé de tri de l'invention comprend une opération de tri par différence de densité consistant à introduire lesdits produits végétaux 11, 12 dans un milieu liquide 40 de séparation dont la densité est comprise entre la densité des produits 11 sans résidus et la densité moyenne des produits 12 à résidus. Le milieu liquide 40 de séparation peut être une solution aqueuse de chlorure de sodium, ou saumure, dont la concentration pour les champignons est comprise entre 10 et 30 g/l, et de préférence entre 15 et 25 g/l. Dans le mode de réalisation de la figure 1, la saumure 40 est introduite à une première extrémité d'un bac 30. Les produits végétaux 11, 12 sont entraînés par le courant ainsi créé vers une deuxième extrémité dudit bac 30 comprenant un filtre 32 et un déversoir 33. Au cours de leur déplacement de la première à la deuxième extrémité du bac, les produits 11 sans résidus, moins denses que la saumure, flottent à la surface du bac, tandis que les produits 12 à résidus plus denses que la saumure tombent au fond du bac 30. La séparation entre les produits végétaux flottant à la surface de la saumure et les produits végétaux se déposant au fond de la saumure est effectuée au niveau de la deuxième extrémité du bac 30. Les produits 11 flottant passent au-dessus du déversoir 33 et sont récupérés pour être conditionnés en boîte puis stérilisés. Les produits 12 à résidus sont maintenus dans le bac 30 par le filtre 32 qui laisse néanmoins passer le liquide de séparation qui est alors recyclé vers l'entrée du bac. Lorsque le bac est saturé en produits à résidus, une trappe 34 est ouverte pour évacuer les déchets ainsi que le liquide de séparation qui est ensuite régénéré.

Dans le procédé décrit ci-dessus, la séparation obtenue n'est pas parfaite puisque certains produits à résidus, pour lesquels la proportion de matière végétale par rapport aux résidus est grande, ont une densité inférieure à la densité de la saumure par exemple. Ils peuvent donc flotter à la surface de la saumure avec les produits sans résidus et sont récupérés avec eux.

Il y a donc avantage, avant l'opération de tri par différence de densité, à éliminer ces produits de grande taille à résidus.

La figure 2 illustre un procédé dans ce but comprenant une opération de tri par différence de température consistant, à la suite d'une opération de blanchiment telle que décrite plus haut, à faire circuler dans un courant 50 d'eau les produits végétaux dans lesquels on distingue les produits de grande 21 et de petite 11 taille sans résidus et les produits de grande 22 et de petite 12 taille avec résidus. La distance D du courant 50 d'eau est déterminée de façon que, après avoir parcouru ladite distance, les produits végétaux 21, 22 de grande taille conservent une température supérieure à celle de l'eau et donc peuvent flotter à la surface de l'eau du fait de leur faible densité, tandis que les produits végétaux 11, 12 de petite taille sont refroidis à la température de l'eau et coulent jusqu'au fond, leur densité étant supérieure à celle de l'eau. Il suffit alors de séparer les produits végétaux 21, 22 de grande taille flottant à la surface de l'eau des produits 11, 12 de petite taille tombés au fond du courant d'eau. La figure 2 montre un dispositif dans lequel la séparation est effectuée à l'aide d'un déversoir 51. Les produits de grande taille sont récupérés puis triés pour en séparer les produits à résidus. Les produits de petite taille sont ensuite soumis à l'opération de tri par différence de densité de la figure 1.

La figure 3 montre, dans le cas où les produits végétaux considérés sont des rondelles de pieds de champignons, une opération de tri par coupe qui permet, comme l'opération de tri par différence de température, d'homogénéiser la taille des produits végétaux traités au cours de l'opération de tri par différence de densité. Comme l'indique la figure 3, cette opération de tri par coupe consiste à couper lesdits pieds de champignons selon au moins trois hauteurs de coupe différentes.

Sur la figure 3, on a représenté un dispositif dans lequel les champignons 101, 102, 103 sont présentés à trois lames 1, 2, 3 de scies successives placées à des hauteurs différentes. La première coupe a pour effet de couper l'extrémité 111 à résidus des champignons 101 les plus grands, les déchets provenant de cette coupe sont éliminés. La deuxième coupe permet d'obtenir des rondelles 121 sans résidus des champignons 101 les plus grands mais également l'extrémité 122 à résidus des champignons 102 de longueur moyenne. Enfin, la troisième coupe fournit des rondelles 131, 132 sans résidus des champignons 101, 102 de grande et moyenne longueur, ainsi que l'extrémité 133 à résidus des champignons 103 les plus courts. Les produits végétaux 121, 122, 131, 132, 133, y compris les extrémités à résidus, résultant des deuxième et troisième coupes, sont récupérés et triés par différence de densité (200) et éventuellement, au préalable, par différence de température (300). Les champignons 141, 142, 143 issus de la troisième coupe constituent les produits de premier choix.

On constate que les rondelles ainsi obtenues ont des tailles relativement homogènes, ce qui ne serait pas le cas en l'absence, par exemple, de la deuxième coupe. On obtiendrait en particulier des rondelles de grande taille à résidus pour les champignons dont le pied aurait une longueur légèrement inférieure à la hauteur de la première coupe.

## Revendications

1. Procédé de tri de produits végétaux, destiné à séparer ceux (12) desdits produits végétaux comportant des résidus de culture, dits produits à résidus, de ceux (11) desdits produits végétaux dépourvus desdits résidus, dits produits sans résidus, caractérisé en ce que lesdits produits végétaux sont soumis aux opérations successives suivantes :
i) une opération de blanchiment, puis
ii) une opération de tri par différence de température consistant à faire circuler les produits végétaux dans un courant (50) d'eau sur une distance (D) déterminée de façon que, après avoir parcouru ladite distance, les produits végétaux (21, 22) de grande taille conservent une température supérieure à la température du courant (50) d'eau, tandis que les produits végétaux (11, 12) de taille inférieure sont refroidis à la température du courant d'eau, et à séparer les produits végétaux flottant à la surface du courant (50) d'eau des produits végétaux tombés au fond dudit courant d'eau, ces derniers étant alors soumis à
iii) une opération de tri par différence de densité consistant à introduire lesdits produits végétaux dans un milieu liquide (40) de séparation dont la densité est comprise entre la densité des produits (11) sans résidus et la densité moyenne des produits (12) à résidus, et à séparer les produits végétaux flottant à la surface du milieu liquide (40) des produits végétaux se déposant au fond dudit milieu liquide.

2. Procédé de tri selon la revendication 1, caractérisé en ce que ledit milieu liquide (40) de séparation est constitué par une solution aqueuse de chlorure de sodium.

3. Procédé de tri selon l'une quelconque des revendications 1 et 2, caractérisé en ce que, lesdits produits végétaux étant constitués par des rondelles de pieds de champignons, ledit procédé comprend une première opération de tri par coupe consistant à couper lesdits pieds de champignons selon au moins trois hauteurs de coupe différentes.

## Claims

1. A method of sorting vegetable products, for separating those (12) of said vegetable products that include cultivation residues, referred to as "residue" products, from those (11) of said vegetable products that do not have said residues, referred to as "residue-free" products, the method being characterized in that said vegetable products are subjected to the following successive operations:
i) a bleaching operation, then
ii) a sorting operation by temperature difference consisting in causing the vegetable products to travel in a flow (50) of water over a distance (D) determined in such a manner that, after travelling said distance, vegetable products (21, 22) of large size retain a temperature higher than the temperature of the flow (50) of water, whereas vegetable products (11, 12) of smaller size are cooled to the temperature of the flow of water, and in separating the vegetable products floating at the surface of the flow (50) of water from the vegetable products that have sunk to the bottom of said flow of water, which latter products are then subjected to
iii) an operation of sorting by density difference consisting in inserting said vegetable products into a separation liquid medium (40) whose density lies between the density of residue-free products (11) and the mean density of residue products (12), and in separating the vegetable products floating at the surface of said liquid medium (40) from the vegetable products that sink to the bottom of said liquid medium.

2. A sorting method according to claim 1, characterized in that said separation liquid medium (40) is constituted by aqueous solution of sodium chloride.

3. A sorting method according to claim 1 or 2, characterized in that said vegetable products are constituted by sliced mushroom stems, said method including a first sorting operation by slicing, consisting in slicing said mushroom stems at at least three different slicing heights.

## Patentansprüche

1. Verfahren zum Sortieren von pflanzlichen Produkten, dazu bestimmt, diejenigen (12) der pflanzlichen Produkte auszusondern, welche Erntereste aufweisen, Produkte mit Resten genannt, aus denjenigen (11) der pflanzlichen Produkte, die frei von den Resten sind, Produkte ohne Reste genannt, dadurch gekennzeichnet, daß die pflanzlichen Produkte den folgenden aufeinanderfolgenden Arbeitsgängen unterworfen werden:
i) einem Blanchierarbeitsgang, dann
ii) einem Sortierarbeitsgang aufgrund der Temperaturdifferenz, der darin besteht, die pflanzlichen Produkte in einem Wasserstrom (50) über eine Entfernung (D) umlaufen zu lassen, die derart bestimmt ist, daß, nachdem sie die Entfernung durchlaufen haben, die pflanzlichen Produkte (21, 22) mit großer Abmessung eine Temperatur beibehalten, die oberhalb der Temperatur des Wasserstroms (50) liegt, während die pflanzlichen Produkte (11, 12) mit geringer Abmessung auf die Temperatur des Wasserstroms abgekühlt sind, und die pflanzlichen Produkte, die an der Oberfläche des Wasserstroms (50) schwimmen, von den pflanzlichen Produkten, die auf den Grund des Wasserstromes gefallen sind, abzutrennen, wobei die letzteren dann unterworfen werden
iii) einem Sortierarbeitsgang aufgrund eines Dichteunterschieds, der darin besteht, die pflanzlichen Produkte in eine flüssige Umgebung (40) zum Abtrennen einzuführen, deren Dichte zwischen der Dichte der Produkte (11) ohne Reste und der mittleren Dichte der Produkte (12) mit Resten liegt, und die pflanzlichen Produkte, die an der Oberfläche der flüssigen Umgebung (40) schwimmen, von den pflanzlichen Produkten zu trennen, die sich am Boden der flüssigen Umgebung ablagern.

2. Verfahren zum Sortieren nach Anspruch 1, dadurch gekennzeichnet, daß die flüssige Umgebung (40) zum Abtrennen durch eine wässrige Lösung von Natriumchlorid gebildet ist.

3. Verfahren zum Sortieren nach einem der Ansprüche 1 und 2, dadurch gekennzeichnet, daß die pflanzlichen Produkte durch Fußscheiben von Pilzen gebildet sind, wobei das Verfahren einen ersten Sortierarbeitsgang durch Schneiden aufweist, der darin besteht, die Füße der Pilze auf mindestens drei unterschiedlichen Schnitthöhen abzuschneiden.
